# FASCICULE DE BREVET EUROPEEN

(11) **EP 1 065 633 B1**
(45) Date de publication et mention de la délivrance du brevet: **02.01.2003**
(21) Numéro de dépôt: 00401706.7
(22) Date de dépôt: 15.06.2000
(51) Int. Cl.: G07F 7/10, H04Q 7/32, G06K 7/06

(54) **Téléphone mobile avec une architecture à plusieurs supports à puce**
Aus mehreren Chiphaltern aufgebautes mobiles Telefon
Mobile telephone with a multiple chip-carrier architecture

(30) Priorité: 30.06.1999 FR 9908525
(43) Date de publication de la demande: 03.01.2001
(73) Titulaire: SAGEM S.A., 75015 Paris (FR)
(72) Inventeur: Bertiaux, M. Philippe, Domicilié Cabinet Christian, 95000 Cergy (FR)
(74) Mandataire: Schmit, Christian Norbert Marie

(56) Documents cités:
- EP-A- 0 614 302
- EP-A- 0 707 290
- WO-A-96/25828
- FR-A- 2 771 205
- GB-A- 2 269 512

## Description

La présente invention a pour objet un téléphone mobile avec une architecture à plusieurs supports à puce. Elle s'applique au domaine de la téléphonie mobile et plus particulièrement la téléphonie mobile selon la norme GSM. Cependant, elle pourrait tout aussi bien s'appliquer à la téléphonie mobile selon d'autres normes tel que DCS voire CDMA. L'invention s'applique donc plus précisément à tout téléphone mobile dont un accès à un réseau de téléphonie mobile se fait à l'aide de moyens d'authentification. Le but de l'invention est de faire d'un téléphone mobile un système ouvert à d'autres applications que de la téléphonie mobile et offrant de plus un accès sécurisé.

Actuellement, un téléphone mobile comporte principalement soit un support à puce nommé support à puce phase 2 dit encore carte SIM phase 2 (Subscriber Identity Module en anglais, pour module d'identité d'abonné en français) soit un support à puce nommé support à puce phase 2+ dit encore carte SIM toolkit. Ces supports sont connectés au téléphone mobile en utilisant une architecture simple dans laquelle un connecteur est relié à un bus interne du téléphone mobile. La carte SIM phase 2 ou phase 2+ est ensuite placé dans ce connecteur.

On connaît la norme ETSI 11.11 dans laquelle on décrit des interfaces externes de la carte SIM Phase 2. Les principales fonctions de cette carte dans un système de téléphonie mobile selon la norme GSM peuvent être regroupées en deux parties. Une partie sécurité permet une authentification sûre d'un utilisateur par un réseau de téléphonie mobile. Une partie service permet un stockage de données de manière sûre et portable. Les données stockées peuvent être des données d'un utilisateur ou des données d'un opérateur d'un réseau de téléphonie mobile.

La carte SIM Phase 2, ou plutôt un contenu de la puce associé à cette carte, est la propriété de l'opérateur du réseau de téléphonie mobile auquel le téléphone mobile est relié. Un contenu de la carte SIM phase 2 est chargé lors d'une phase de personnalisation de la carte et ne peut plus par conséquent être modifié, sauf retour chez l'opérateur.

On connaît aussi la norme ETSI 11.14 dans laquelle on décrit des spécifications d'une carte SIM toolkit. En plus des fonctions de la carte SIM phase 2, la carte SIM toolkit permet un téléchargement et une exécution de nouvelles applications. On obtient ainsi une puce dans laquelle on trouve une partie application ou gestion d'application et une partie opérateur c'est à dire principalement les fonctionnalités de la carte SIM phase 2.

Les applications téléchargées dans la carte peuvent envoyer des commandes, dites commandes pro-actives, au téléphone mobile. En respectant le formalisme définit dans la norme. Par la suite on parlera d'application toolkit pour parler des applications exécutables par une carte SIM toolkit.

Les offres actuelles de ces applications toolkits sont intégrées dans la carte SIM phase 2+, en plus des fonctionnalités de la SIM Phase 2.

Un téléphone mobile avec une telle architecture présente des problèmes. Aujourd'hui, les cartes à puces ont une capacité mémoire relativement faible. Or, on doit sauvegarder dans cette mémoire non seulement des données relatives aux fonctionnalités SIM Phase 2 mais aussi des applications téléchargées et éventuellement des données de stockage relatives à ces applications téléchargées ou déjà présentes. Dans le document FR-A-2 771 201 une seconde carte est dédiée uniquement à l'application.

De plus, une carte SIM phase 2 ou phase 2+ est toujours la propriété de l'opérateur même après mise en place dans un téléphone mobile. En particulier, un téléchargement et une exécution d'applications toolkit se font sous son contrôle. Or, un certain nombre d'acteurs, autres que des opérateurs de réseaux de téléphonie mobile, souhaitent pouvoir utiliser ce moyen de communication sécurisé pour proposer de nouveaux services par le biais d'applications toolkit exécutées dans un mobile. Un exemple est l'utilisation de la téléphonie mobile pour réaliser des paiements à distance, avec un porte-monnaie électronique ou avec une carte bancaire. Un autre exemple consiste en l'utilisation de la téléphonie mobile pour des jeux.

Le téléphone mobile de l'état de la technique est un système fermé. En effet, ce système n'accepte pas d'applications autres que celles autorisées par le responsable de la carte à puce phase 2+. Il est fermé en ce sens que seules des applications toolkits autorisées par l'opérateur sont exécutables avec le téléphone mobile. En plus, le nombre d'applications est limité par une capacité de la mémoire d'une carte SIM toolkit.

La présente invention a pour objet de remédier aux problèmes cités en proposant une architecture avec plusieurs cartes à puce. Le téléphone mobile comporte ainsi une première carte à puce produite par l'opérateur et comportant la partie opérateur, une deuxième carte à puce dans laquelle on place ou on télécharge des modes de gestion d'application et une troisième carte à puce permettant de réaliser une ou plusieurs applications sous le contrôle de la puce du troisième support à puce. En conséquence, on sépare physiquement une partie sécurisation d'un établissement d'une communication téléphonique et une partie gestion d'application utilisant le téléphone mobile comme interface de communication entre un utilisateur et un prestataire de services.

La solution de l'invention présente plusieurs avantages. Ainsi avec l'invention, on peut associer à une application un support à puce. Ainsi, un utilisateur dispose d'une application en plaçant un support à puce dédié dans un connecteur associé et tout prestataire de services peut développer et proposer une application indépendamment d'une volonté d'un opérateur. En effet, un téléchargement d'une application est optionnel, la carte fournie à l'utilisateur pouvant être pré-chargée avec un mode de gestion de l'application.

De plus, on connaît la norme 11.14 v7 dans laquelle on décrit notamment des commandes pro-actives grâce auxquelles un opérateur peut utiliser une carte SIM toolkit pour modifier des paramètres dans la partie du support à puce dont ils sont propriétaires. En effet, via des commandes pro-actives, il est tout à fait possible de développer une application, dans la partie application, qui envoie des ordres à la partie opérateur.

On réalise ainsi une puce ne comportant que des fonctions dédiées au chargement, à la gestion et à l'exécution d'applications. Il est donc possible, avec des puces de l'état de la technique, de développer des applications plus importantes avec cette solution carte toolkit qu'avec solution SIM toolkit.

La séparation physique de la partie opérateur des autres fonctions procure un niveau de sécurité supplémentaire. En effet, une sécurité intégrée pour une application toolkit peut être gérée de manière complètement différente de celle mise en oeuvre pour l'application opérateur.

La présente invention selon le revendication 1 concerne donc un téléphone mobile reliable radioélectriquement à un réseau de téléphonie mobile caractérisé en ce qu'il comporte un premier support à puce de sécurité, un deuxième support à puce d'application et un troisième support à puce de gestion, la puce du deuxième support permettant à un propriétaire du support à puce d'application d'utiliser le téléphone mobile comme interface de communication avec un prestataire de service correspondant à l'application et reliable au réseau de téléphonie mobile, la puce du troisième support organisant une communication entre le téléphone mobile, la puce du premier support et la puce du troisième support et en ce que la première, la deuxième et la troisième carte à puce sont reliées à un premier, un deuxième et un troisième connecteur respectivement.

La présente invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : une représentation schématique d'une architecture du téléphone mobile selon l'invention ;
Figure 2 : une représentation symbolique d'un support à puce à unités pré-payées ;
Figure 3 : un exemple de visualisation, sur afficheur du téléphone mobile, d'un menu géré par le deuxième support à puce de l'invention.

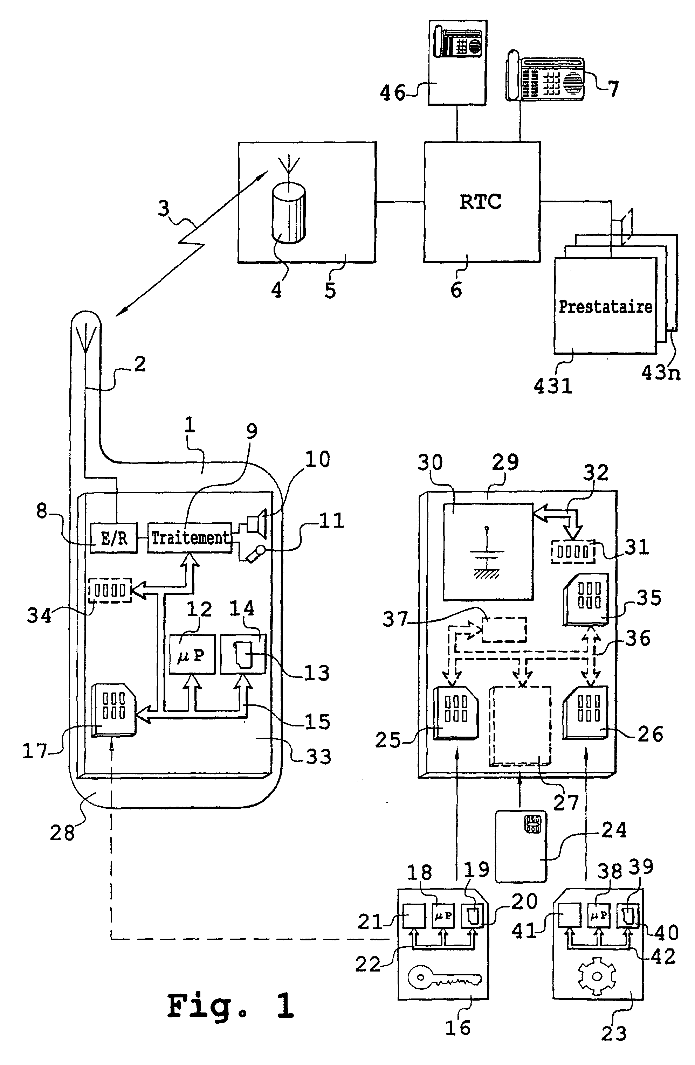

La figure 1 montre un téléphone 1 mobile selon l'invention. Le téléphone 1, pour fonctionner, comporte une antenne 2 émettant ou recevant des signaux 3 radioélectriques à destination ou en provenance respectivement d'une station 4 de base d'un réseau 5 de téléphonie mobile. Le réseau 5 est relié à un réseau 6 de téléphonie fixe. Ce réseau fixe permet de faire le lien entre le téléphone 1 et un téléphone 7 fixe relié au réseau 7, généralement par une liaison filaire, un câble métallique par exemple. Le réseau 6 est habituellement appelé le réseau téléphonique commuté. Pour pouvoir émettre et/ou recevoir des signaux 3 le téléphone 1 comporte un dispositif 8 d'émission et/ou de réception relié d'une part à l'antenne 2 et d'autre part à un dispositif 9 de traitement de signal. Le dispositif 8 a pour fonction de réaliser principalement des transpositions en fréquence pour passer d'une fréquence intermédiaire à une fréquence d'émission lors d'une émission et pour passer d'une fréquence de réception à une fréquence intermédiaire lors d'une réception. Le dispositif 9 a pour fonction de convertir des signaux analogiques en signaux numériques et de les décoder lors d'une réception d'un signal ou l'inverse lors d'une émission d'un signal. Le dispositif 9 est relié de manière symbolique à un haut-parleur 10 pour produire des signaux acoustiques à partir de signaux reçus du dispositif 9 et est relié aussi à un microphone 11 permettant de produire des signaux analogiques à partir de signaux acoustiques reçus et de les envoyer au dispositif 9. Le téléphone 1 comporte aussi un microprocesseur 12 et un programme 13 dans une mémoire de programme 14 ayant pour fonction de gérer une émission et/ou une réception d'un signal dans le téléphone 1, tous ces éléments étant reliés par un bus 15 de données, d'adresses et de commandes.

Un accès du téléphone 1 au réseau 5 est sécurisé. Cette sécurisation est assurée par un support 16 amovible à puce. En effet, le support 16 comporte différentes clés d'authentification et algorithmes d'authentification associés afin de permettre une authentification d'un utilisateur du téléphone 1 et ainsi autoriser ou non un accès au réseau 5. Pour cela, le téléphone 1 comporte un connecteur 17 permettant de se connecter avec le support 16. Le support 16 comporte une puce avec un microprocesseur 18, un programme 19 dans une mémoire de programme 20 et une mémoire 21, le tout étant relié par un bus 22 de données, d'adresses et de commande. Dans une puce d'un support à puce de type phase 2+, la mémoire 21 est la mémoire dans laquelle toutes les données et applications sont sauvegardées. De plus, un accès au support 16 est réglementé, pour des raisons de sécurité, notamment par un opérateur du réseau 5.

En conséquence, dans l'invention, on sépare physiquement une partie ayant trait à une sécurisation d'un accès au réseau 5, et une partie ayant trait à des applications utilisant le téléphone 1 comme support de communication. Dans ce cas le support 16 au lieu d'être un support phase 2+ est, dans l'invention, un supporte 16 de type phase 2. Le téléphone 1 comporte en plus un deuxième support 23 amovible de gestion et un troisième support 24 amovible d'application. Le support 23 et le support 24 représentent principalement la partie concernant des applications toolkits qui étaient présentes dans un support à puce phase 2+. A ces supports 16, 23 et 24 sont associés des connecteurs 25, 26, et 27 respectivement.

Le téléphone 1 comporte un premier corps 28 principal et un deuxième corps 29 amovible par rapport au premier corps 28. Le corps 28 comporte l'antenne 2, les éléments 8 à 15 et le connecteur 17. Le corps 29 comporte principalement un dispositif 30 d'alimentation du téléphone 1 et un connecteur 31. Le dispositif 30 est relié au connecteur 31 par un bus 32. Le téléphone 1 comporte une cavité 33 dans laquelle le corps 29 vient s'emboîter. La cavité 33 comporte un connecteur 34 destiné à être connecté avec le connecteur 31. La cavité 33 comporte en outre le connecteur 17.

Dans l'invention le connecteur 25, le connecteur 26 et le connecteur 27 sont placés dans le corps 29. Ainsi, le connecteur 17 est utilisé comme connecteur d'interface entre le bus 15 et les connecteurs 25 à 27. Pour cela le corps 29 comporte un connecteur 35 à un emplacement tel que lorsque le corps 29 est emboîté dans la cavité 33 le connecteur 35 entre en contact avec le connecteur 17. Le connecteur 17 a généralement une forme de cavité. Le connecteur 35 est, dans un exemple préféré, de forme complémentaire au connecteur 17. Le connecteur 35 a une forme d'excroissance destinée à être insérée dans la cavité dans laquelle est réalisé le connecteur 17. Les connecteurs 25 à 27 sont reliés au connecteur 35 par l'intermédiaire d'un bus 36. Dans un exemple préféré le bus 36 est contrôlé par un contrôleur 37. Le contrôleur 37 a pour fonction de gérer des demandes d'accès au bus 36 en provenance des puces des supports 16, 23 et 24 et d'éviter ainsi des conflits. De plus, le contrôleur 37 aiguille une information en provenance du microprocesseur 12 vers le support correspondant.

Dans une variante préférée le contrôleur 37 est intégré dans le support 23. En effet, le support 23 comporte un microprocesseur 38, un programme 39 dans une mémoire de programme 40, une mémoire de sauvegarde 41 et un bus 42 de données, d'adresses et de commande. Ainsi, le support 23 est parfaitement capable d'assumer les fonctions du contrôleur 37.

Dans une autre variante, la fonction de contrôle du bus 36 est à la charge du microprocesseur 12 du corps 28.

Le support 16 a pour fonction d'assurer un accès sécurisé au réseau 5 grâce notamment à une phase d'authentification. Ce support 16, bien qu'amovible, est un élément nécessaire au téléphone 1 pour lui permettre de se connecter radioélectriquement avec le réseau 5. Le support 23 permet une utilisation du support 24 par le téléphone 1. De plus, le support 23 est de contenu variable et de présence facultative. Une absence du support 23 ne remet pas en cause le fonctionnement du téléphone mobile dans le cas de communications téléphoniques normales, c'est-à-dire avec un autre téléphone mobile ou fixe tel que le téléphone 7. Cependant, la présence du support 23 est nécessaire pour l'utilisation du support 24.

Le support 23 comporte toutes les commandes pro-actives destinées à commander le téléphone 1. Le support 23 comporte aussi un mode de gestion nécessaire à l'utilisation d'une application associée au support 24. Le support 24 permet de réaliser des applications en utilisant le téléphone 1, et donc le réseau 5, comme interface de communication avec un prestataire 431 à 43n de services correspondant à l'application. A chaque mode de gestion présent dans la mémoire 41 du support 23 correspond une application associée et donc un support 24. Toutefois, une puce du support 24 peut très bien comporter plusieurs applications.

Dans un exemple nullement limitatif le support 23 correspond à une carte à puce émise par une banque correspondant, par exemple, au prestataire 431. Le support 23 comporte ainsi un mode de gestion, principalement dans la mémoire 41 permettant, lors d'une exécution de ce procédé de gestion par le microprocesseur 38, de gérer l'application associée au support 24. Si le support 23 comporte le mode de gestion associé à l'application liée au prestataire 431, alors un support à puce émis par ce prestataire 431 peut être utilisé avec le téléphone 1. En fonction des modes de gestion se trouvant dans la mémoire 41 du support 23 on peut utiliser le téléphone 1 comme interface de communication avec un ou plusieurs prestataires de services parmi n. Le support 23 ne comportant plus la partie sécurité d'un support à puce phase 2+ alors une capacité de sauvegarde de la mémoire 41 du support 23 est supérieure à une capacité de sauvegarde de la mémoire 21 du support 16. Ainsi, un plus grand nombre de mode de gestion peut être mémorisé dans la mémoire 41.

Le téléphone 1 comporte des moyens pour télécharger un mode supplémentaire de gestion à partir du réseau 5. Ces moyens sont essentiellement le microprocesseur 38 et la mémoire 41. On peut donc télécharger dans la mémoire 41 un mode supplémentaire de gestion. On met ainsi à jour, dans la mémoire 41, une liste de prestataires de services disponibles et dont des applications sont exécutables avec le téléphone 1. En conséquence, on met à jour une liste de supports 24 utilisables dans le téléphone 1. Une initiative pour demander un téléchargement peut venir soit d'un prestataire de service, soit, dans un exemple de l'utilisateur du téléphone 1. Dans cet exemple, l'utilisateur se connecte via le téléphone 1 et le réseau 5 au prestataire de service souhaité. Une fois connecté, l'utilisateur autorise, par un appui sur une touche du téléphone 1 par exemple, un téléchargement d'un mode de gestion d'une application proposée.

Dans un exemple la mémoire 41 de la puce du support 23 permettant de sauvegarder des messages envoyés par le réseau est une mémoire de type EEPROM (Electrically Erasable Programmable Read Only Memory en anglais, pour mémoire à lecture seule électriquement effaçable et programmable en français).

On connaît dans l'état de la technique des supports 24 à unités téléphoniques prépayées ou à durée de communication prépayée, les supports 24 à unités téléphoniques prépayées étant les plus répandus. En effet, de tels supports s'utilisent avec des téléphones fixes comportant un lecteur de cartes. En général, ce support 44, représenté sous une forme symbolique à la figure 2, comporte une série de jonctions 451 à 45m, représentés symboliquement par une diode, à chaque jonction 451 à 45m étant associée une unité. Lorsqu'une unité est consommée, on détruit une diode, notamment par passage d'un courant d'intensité supérieure à une intensité admissible par une telle diode et on interdit un passage d'un courant dans cette diode. Par contre, un support à durée de communication prépayée décompte une unité pour un intervalle de temps fixe, alors qu'avec le support 44 l'intervalle de temps est variable en fonction d'une distance de l'appel dans la plupart des cas.

On place dans la mémoire 41 un mode de gestion du support 44. En conséquence un propriétaire du support 44 pourra utiliser le téléphone 1, après accord du propriétaire du support 16 si ce sont deux personnes différentes, comme une cabine 46 téléphonique (figure 1) reliée au réseau 6 mais mobile. Un avantage d'une telle utilisation du support 44 est de le rendre universel, c'est-à-dire que le support 44 fonctionne aussi bien sur un téléphone mobile 1 que dans une cabine 46 ou tout autre poste téléphonique comportant un lecteur de cartes à puce. En effet, un inconvénient des cartes à durée de communication prépayée est qu'elles ne sont qu'avec des téléphones mobiles. En conséquence, avec le téléphone mobile de l'invention, un détenteur d'un support 44, au vu d'un nombre de cabines 46 et de téléphones 1, trouvera forcément un support pour pouvoir téléphoner.

Dans un exemple préféré, un accès à une application est sécurisé. En conséquence, on autorise ou non un accès à une fonction avec un mot de passe par exemple.

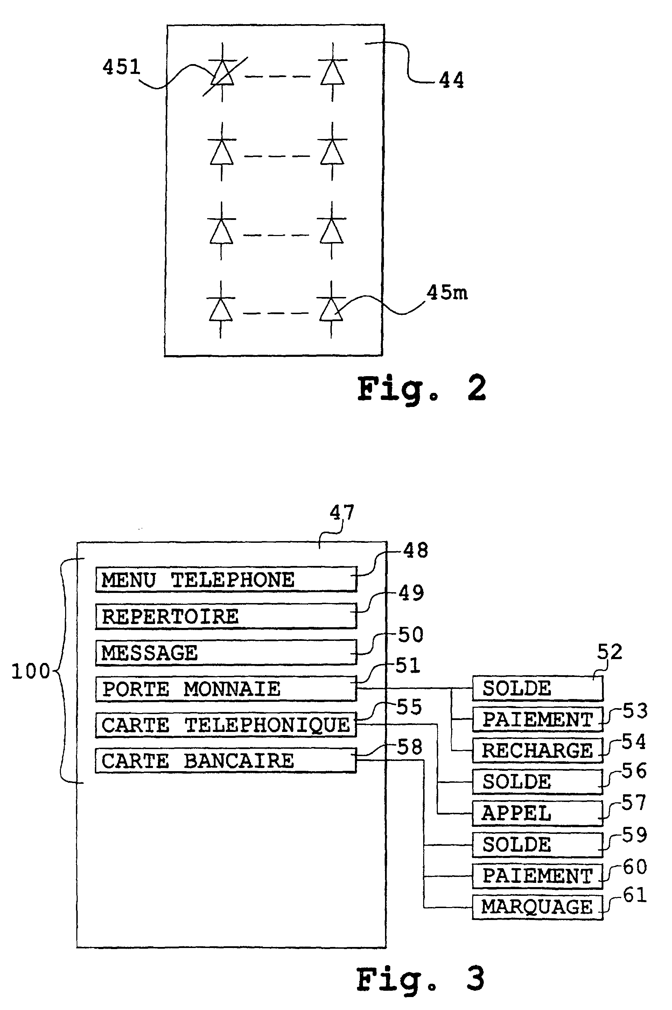

La figure 3 montre un exemple d'un affichage sur un afficheur 47 du téléphone 1. Un affichage sur l'afficheur 47 est contrôlé par un mode de gestion d'affichage dans la mémoire 41. En fonction des modes de gestion dans la mémoire 41 on fait afficher un menu 100 à plusieurs niveaux. Dans un exemple, nullement limitatif, un premier niveau du menu 100 comporte les modes de gestion principaux contenus dans la puce du support 23. Dans cet exemple, le menu comporte un label 48 relatif à un menu téléphone c'est-à-dire regroupant les principales fonctions réalisables par le téléphone 1. Le label 48 est associé à une application de réglage du téléphone 1 principalement. Le menu 100 comporte aussi un label 49 de répertoire et un label 50 de message. Le label 49 permet d'accéder à une liste préférentielle de numéros de téléphone. Le label 50 permet d'accéder à diverses fonctions relatives à l'émission et/ou la réception de messages de type SMS (Short Message Service en anglais, pour service de messages courts en français). Les labels 48, 49 et 50 sont généralement déjà accessibles dans l'état de la technique.

Dans un exemple, on a des labels supplémentaires, et on affiche dans le menu 100 un label 51 associé à des applications de porte-monnaie électronique. Pour ce faire une sélection du label 51 permet de faire afficher un sous-menu constitué par un label 52, associé à une application de consultation d'un solde, un label 53, associé à une application de paiement, et un label 54, associé à une application de recharge d'un solde dans la puce du support 24 (figure 1).

En plus du label 51 le menu 100 comporte un label 55 relatif à la gestion d'un appel par une carte téléphonique à unités prépayées. Une sélection du label 55 donne accès à un sous-menu constitué d'un label 56 associé à une application d'affichage d'un solde d'unités disponibles dans la carte téléphonique. Le sous-menu du label 55 comporte aussi un label 57 associé à une application permettant de réaliser un appel en utilisant la carte téléphonique comme moyen de paiement de l'appel effectué. Le menu 100 comporte aussi un label 58 associé à une application de gestion d'une carte bancaire. Une sélection de ce label 58 donne accès à un sous-menu constitué d'un label 59 associé à une application de consultation d'un solde disponible sur un compte associé à cette carte bancaire, un label 60 associé à une application de paiement à l'aide de cette carte bancaire et un label 61 associé à une application de marquage. Le marquage consiste à prélever un numéro d'une carte bancaire. Ceci est notamment utilisé dans des procédures de cautionnement dans des contrats de location telles que lors d'une location d'un véhicule. Le menu 100 est un exemple de menu que l'on pourrait obtenir sur l'afficheur 47 alors que pour un autre téléphone mobile on pourrait avoir un menu 100 ne comportant pas les labels 55 et 58 ou alors comportant d'autres labels.

Si un utilisateur souhaite réaliser un achat avec une carte bancaire, il peut, dans l'invention, utiliser le téléphone 1. Il insère la carte bancaire dans le lecteur 27. Il sélectionne le label 58 qui permet d'obtenir le sous menu associé à l'application de gestion d'une carte bancaire. L'accès au sous-menu est obtenu après une phase d'authentification, par le microprocesseur 38 et une application de gestion d'accès présente notamment dans la mémoire 41, afin d'autoriser ou non un accès à l'application de gestion d'une carte bancaire. Dans ce sous-menu, l'utilisateur sélectionne le label 60 associé à l'application qui va lui permettre de réaliser le paiement désiré.

## Revendications

1. Téléphone (1) mobile reliable radioélectriquement à un réseau (5) de téléphonie mobile **caractérisé en ce qu'**il comporte un premier support (16) amovible à puce de sécurité, un deuxième support (23) amovible à puce de gestion et un troisième support (24) amovible à puce d'application, le deuxième support (23) permettant à un propriétaire du support (24) à puce d'application d'utiliser le téléphone (1) mobile comme interface de communication avec un prestataire (431-43n) de service correspondant à l'application et reliable au réseau (5) de téléphonie mobile, la puce du deuxième support (23) organisant la communication entre le téléphone (1) mobile, la puce du premier support (16) et la puce du troisième support (24) et **en ce que** le premier, le deuxième et le troisième support à puce (16, 23, 24) sont reliées à un premier, un deuxième et un troisième connecteur (25-27) respectivement.

2. Téléphone (1) mobile selon la revendication 1 **caractérisé en ce qu'**il comporte un premier corps (28) principal, muni d'un dispositif (8) électronique d'émission et ou de réception de signaux radioélectriques et muni d'un dispositif (9) de traitement associés, et un deuxième corps (29) muni d'un dispositif (30) d'alimentation et amovible par rapport au premier corps (28) et **en ce que** le premier, et ou le deuxième et ou le troisième connecteur (25-27) sont placés dans le deuxième corps (29).

3. Téléphone (1) mobile selon l'une des revendications 1 ou 2 **caractérisé en ce qu'**il comporte un bus (36) auquel sont raccordés le premier, le deuxième et le troisième connecteur (25-27), un accès au bus (36) étant contrôlé par un dispositif (37) de contrôle.

4. Téléphone (1) mobile selon la revendication 3 **caractérisé en ce que** le dispositif (37) de contrôle est intégré dans le troisième support (23) à puce.

5. Téléphone (1) mobile selon l'une des revendications 1 à 4 **caractérisé en ce que** la puce du troisième support (23) à puce a une mémoire (41) de sauvegarde de messages envoyés par le réseau (5).

6. Téléphone (1) mobile selon l'une des revendications 1 à 5 **caractérisé en ce qu'**il comporte des moyens pour télécharger un mode supplémentaire de gestion dans la puce du troisième support (23) à puce.

## Patentansprüche

1. Mobiltelefon (1), das funkelektrisch mit einem Mobiltelefonnetz (5) verbunden werden kann, **dadurch gekennzeichnet**, daßes eine erste abnehmbare Halterung (16) für einen Sicherheitschip, eine zweite abnehmbare Halterung (23) für einen Steuerungschip und eine dritte abnehmbare Halterung (24) für einen Anwendungschip aufweist, wobei die zweite Halterung (23) es einem Eigentümer der Halterung (24) für den Anwendungschip ermöglicht, das Mobiltelefon (1) als Kommunikationsschnittstelle mit einem Informationsanbieter (431-43n) zu verwenden, die der Anwendung entspricht und mit dem Mobiltelefonnetz (5) verbindbar ist, wobei der Chip der zweiten Halterung (23) die Kommunikation zwischen dem Mobiltelefon (1), dem Chip der ersten Halterung (16) und dem Chip der dritten Halterung (24) organisiert und daß die erste, die zweite und die dritte Chiphalterung jeweils mit einem ersten, einem zweiten und einem dritten Steckverbinder (25-27) verbunden sind.

2. Mobiltelefon nach Anspruch 1, **dadurch gekennzeichnet, daß** es einen ersten Hauptkörper (28), der mit einer Vorrichtung (8) für das elektronische Ausstrahlen und/oder Empfangen von funkelektrischen Signalen und mit einer damit verbundenen Verarbeitungseinheit (9) ausgestattet ist, und einen zweiten Körper (29) aufweist, der mit einer Versorgungsvorrichtung (30) ausgestattet ist und vom ersten Körper abnehmbar ist, und daß der erste und/oder der zweite und/oder der dritte Steckverbinder (25-27) auf dem zweiten Körper (29) angeordnet sind.

3. Mobiltelefon nach einem der Ansprüche 1 oder 2, **dadurch gekennzeichnet, daß** es einen Bus (36) aufweist, an den der erste, der zweite und der dritte Steckverbinder (25-27) angeschlossen sind, wobei der Zugang zum Bus (36) durch eine Steuervorrichtung (37) gesteuert wird.

4. Mobiltelefon nach Anspruch 3, **dadurch gekennzeichnet, daß** die Steuervorrichtung (37) in die dritte Chiphalterung (23) integriert ist.

5. Mobiltelefon nach einem der Ansprüche 1 bis 4, **dadurch gekennzeichnet, daß** der Chip der dritten Chiphalterung (23) einen Speicher (41) zum Speichern der von dem Netz (5) gesendeten Nachrichten aufweist.

6. Mobiltelefon nach einem der Ansprüche 1 bis 5, **dadurch gekennzeichnet, daß** es Einrichtungen aufweist, um einen zusätzlichen Steuerungsmodus in den Chip der dritten Chiphalterung (23) zu übertragen.

## Claims

1. Mobile telephone (1) radio electrically connectable to a mobile telephony network (5), ***characterised by*** the fact that it includes a first detachable support (16) with a security chip, a second detachable support (23) with a management chip and a third detachable support (24) with an application chip, the second support (23) allowing an owner of the support (24) with an application chip to use the mobile telephone (1) as an interface for communication with a service provider (431-43n) corresponding to the application and connectable to the mobile telephony network (5), the chip of the second support (23) organising the communication between the mobile telephone (1), the chip of the first support (16) and the chip of the third support (24), and by the fact that the first, second and third chip supports (16, 23, 24) are connected to a first, a second and a third connector (25 - 27) respectively.

2. Mobile telephone (1) as described in claim 1, **characterised by** the fact that it includes a first main body (28), provided with an electronic device (8) for transmission or reception of radio electrical signals and provided with an associated processing device (9), and a second body (29) provided with a power supply device detachable relative to the first body (28) and by the fact that the first, and or the second and or the third connector (25 - 27) are placed in the second body (29).

3. Mobile telephone (1) as described in one of claims 1 or 2, ***characterised* by** the fact that it includes a bus (36) to which the first, second and third connector (25 - 27) are connected, access to the bus (36) being controlled by a control device (37).

4. Mobile telephone (1) as described in claim 3, ***characterised by*** the fact that the control device (37) is integrated in the third chip support (23).

5. Mobile telephone (1) as described in one of claims 1 to 4, ***characterised by*** the fact that the chip of the third chip support (23) has a memory (41) for storing messages sent by the network (5).

6. Mobile telephone (1) as described in one of claims 1 to 5, **characterised by** the fact that it includes means for downloading an additional management mode to the third chip support (23).
